# EUROPEAN PATENT APPLICATION

(11) **EP 4 629 704 A1**
(43) Date of publication of application: **08.10.2025**
(21) Application number: 25168007.0
(22) Date of filing: 02.04.2025
(51) Int. Cl.: H04W 52/02, H04W 72/044, H04W 72/543

(54) **COMMUNICATION CONTROL METHOD, COMMUNICATION SYSTEM**

(30) Priority: 05.04.2024 JP 2024061801
(71) Applicant: TOYOTA JIDOSHA KABUSHIKI KAISHA, Toyota-shi, Aichi-ken, 471-8571 (JP)
(72) Inventor: SHAO, Xiao, Toyota-shi, Aichi-ken 471-8571 (JP)
(74) Representative: Simmons & Simmons

(57) **Abstract**

A communication control method comprises receiving, by a first device, information including a condition regarding energy consumed in communication that uses a network, and transmitting, by the first device, information based on a determination result as to whether the communication satisfies the condition, to a transmission source of the information.

## Description

### BACKGROUND

### 1. Technical Field

The present disclosure relates to a communication control method and a communication system.

### 2. Description of the Related Art

Conventionally, there is a technique of dynamically allocating data processing according to power generated by renewable energy in a plurality of data centers (for example, Japanese Patent Application Publication No. 2021-189845).

### SUMMARY OF THE INVENTION

An object of the present disclosure is to provide a communication control method and a communication system capable of ascertaining whether target communication satisfies a condition regarding consumed energy.

One aspect of the present disclosure is a communication control method including: receiving, by a first device, information including a condition regarding energy consumed in communication using a network; and transmitting, by the first device, information based on a determination result as to whether the communication satisfies the condition to a transmission source of the information.

Furthermore, one aspect of the present disclosure is a communication system including a first device, in which the first device includes circuitry that executes processing of receiving information including a condition regarding energy consumed in communication using a network and processing of transmitting information based on a determination result as to whether the communication satisfies the condition to a transmission source of the information.

An aspect of the present disclosure may include at least one of a device corresponding to the first device or the second device in the communication system described above, a program, and a non-transitory computer-readable recording medium recording the program.

### BRIEF DESCRIPTION OF THE DRAWINGS

FIGS. 1A and 1B are explanatory diagrams of a fifth generation mobile communication system (5G);
FIG. 2 is a diagram illustrating a configuration example of an information processing apparatus;
FIG. 3 is a sequence diagram illustrating a first operation example of a communication system;
FIG. 4 is a sequence diagram illustrating a second operation example of the communication system; and
FIG. 5 is a sequence diagram illustrating the second operation example of the communication system.

### DESCRIPTION OF THE PREFERRED EMBODIMENT

A communication control method according to an embodiment includes: receiving, by a first device, information including a condition regarding energy consumed in communication using a network; and transmitting, by the first device, information based on a determination result as to whether the communication satisfies the condition to a transmission source of the information. According to the communication control method, it is possible to grasp whether target communication satisfies a condition regarding consumed energy.

The network is, for example, a 5G network, but may be a cellular network other than the 5G network (4G (LTE) network, 6G network, and the like). Furthermore, the network may include a wireless network (wireless LAN (including Wi-Fi) or the like) other than the cellular network.

The condition regarding energy is, for example, at least one of a condition regarding energy consumption (EC), a condition regarding energy efficiency (EE), and a condition regarding use of renewable energy. The condition may be a single condition or a composite condition including two or more conditions. The renewable energy includes natural energy such as sunlight, solar heat, wind power, tide, and geothermal heat, biomass energy, and recycled energy such as waste power generation. The information regarding the renewable energy includes information indicating the renewable energy amount and information indicating the renewable energy ratio. The value indicating the EE, the EC, and the amount or ratio of renewable energy may be a current value or a value of the future (in the future) (prediction value or estimation value).

The "information based on a determination result" may include at least one of information indicating whether communication satisfies a condition regarding a consumption of energy and information indicating whether communication satisfies a condition regarding energy efficiency. The "information based on a determination result" may include information indicating whether communication satisfies a condition regarding use of renewable energy.

In a case where the communication does not satisfy the condition or does not satisfy the condition in the future, the information based on the determination result by the first device may include information indicating alternative communication that satisfies the condition. The information indicating the alternative communication may include information indicating an alternative quality parameter in which a quality parameter related to the communication is relaxed so that the condition is satisfied.

In a case where the communication does not satisfy the condition regarding the energy or does not satisfy the condition in the future, the information based on the determination result may include at least one of information indicating a consumption of the energy and information indicating energy efficiency based on the consumption in a case where a quality parameter of the communication is relaxed. The quality parameter may be, for example, a quality of service (QoS) parameter. In addition, the quality parameter may be a QoS parameter that realizes quality of experience (QoE). Examples of the quality parameter include, but are not limited to, a throughput, an error rate, a delay, a bit rate, and the like. The unit of "communication" is a user equipment (UE), a PDU session, a network function (NF), a network slice, or a site, but is not limited thereto.

Furthermore, in a case where the communication does not satisfy the condition regarding the energy or does not satisfy the condition in the future, the information based on the determination result may include information indicating a time block in which the condition is satisfied.

The communication control method may further include: receiving, by a second device, information indicating a quality parameter of the communication from the first device; acquiring, by the second device, at least one of information indicating an amount of energy used by communication using the quality parameter, information indicating energy efficiency based on the amount of the energy, and information regarding use of renewable energy in the amount of the energy; and determining, by the first device, whether the communication using the quality parameter satisfies the condition based on at least one of information indicating the amount of the energy, information indicating the energy efficiency, and information regarding the use of the renewable energy.

The communication control method may further include: in a case where it is determined that the communication does not satisfy the condition, transmitting, by the first device, information indicating a relaxed quality parameter in which a quality parameter of the communication is relaxed to the second device; acquiring, by the second device, at least one of information indicating an amount of energy used by communication using the relaxed quality parameter, information indicating energy efficiency based on the amount of the energy, and information regarding use of renewable energy in the amount of the energy; and determining, by the first device, whether the communication using the relaxed quality parameter satisfies the condition based on at least one of information indicating the amount of the energy, information indicating the energy efficiency, and information regarding the use of the renewable energy.

The communication control method may further include: in a case where it is determined that the communication using the relaxed quality parameter satisfies the condition, transmitting, by the first device, the information based on the determination result, including the information indicating the relaxed quality parameter.

The communication control method may further include transmitting, by the first device, information indicating a change in a state of the network to the transmission source of the information in a case where the state of the network changes.

Hereinafter, a communication system and a communication control method according to an embodiment will be described with reference to the drawings. The configuration of the embodiment is an example, and the present disclosure is not limited to the configuration of the embodiment.

### Configuration of Communication System

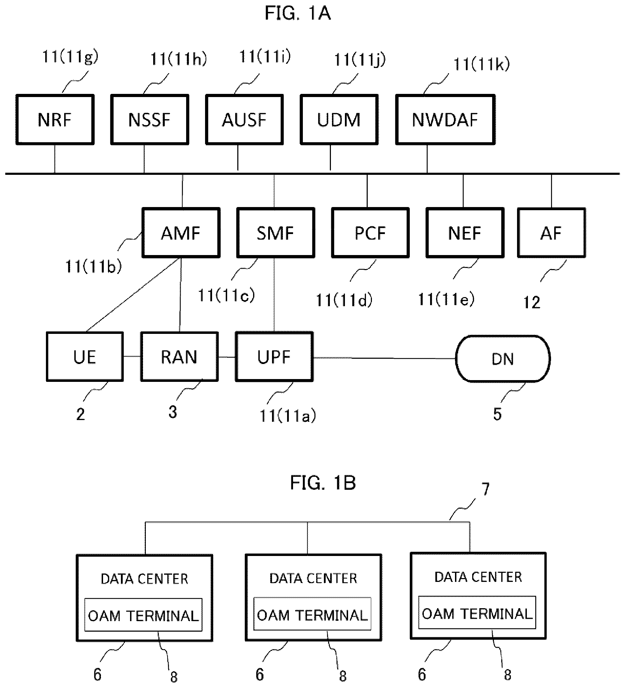

FIG. 1A illustrates components constituting a fifth generation mobile communication system (5G network). In FIG. 1A, a user equipment (UE) 2 is a terminal of a user (subscriber). A radio access network (RAN) 3 is an access network to a 5G core network (5GC). The RAN 3 is configured by a base station (gNB) 3A. The 5G network includes a 5GC and an access network ((R)AN), and the UE 2, a DN 5, and an AF 12 are connected to the 5G network. Each of the NFs 11a to 11k is, for example, a function implemented by one or two or more computers (information processing apparatuses) executing a program.

The 5GC includes a set of components (called network nodes) having a predetermined function called a network function (NF). FIG. 1A illustrates the following as the NF 11 constituting the 5GC.
UPF (User Plane Function) 11a
AMF (Access and Mobility Management Function) 11b
SMF (Session Management Function) 11c
PCF (Policy Control Function) 11d
NEF (Network Exposure Function) 11e
NRF (Network Repository Function) 11g
NSSF (Network Slice Selection Function) 11h
AUSF (Authentication Server Function) 11i
UDM (Unified Data Management) 11j
NWDAF (Network Data Analytics Function) 11k

The UPF 11a performs routing and forwarding of user packets (user plane packets transmitted and received by the UE 2), packet inspection, and QoS processing. The AMF 11b is an in-service-range accommodation device of the UE 2 in the 5GC. The AMF 11b accommodates the RAN 3 and performs subscriber authentication control, location (mobility) management of the UE 2, and the like. The UDM 11j provides subscriber information or acquires, registers, deletes, and changes the state of the UE 2.

The SMF 11c manages a protocol data unit (PDU) session and controls the UPF 11a for the implementation of QoS control and policy control. The PDU session is a virtual communication path for transmitting and receiving data between the UE 2 and the data network (DN) 5. The DN 5 is a data network (the Internet or the like) outside the 5GC.

The PCF 11d performs QoS control, policy control, billing control, and the like under the control of the SMF 11c. In the QoS control, quality of communication such as priority transfer of a packet is controlled. In the policy control, communication control such as QoS, packet transfer availability, and billing based on network or subscriber information is performed. The NEF 11e plays a role of mediating communication between an external node such as the application function (AF) 12 and a node in a control plane. The AF 12 is an information processing apparatus (external server, external terminal, etc.) in which an application outside the 5GC is mounted.

The NRF 11g stores and manages information of NFs (for example, AMF, SMF, UPF, and the like) in the 5GC. The NRF 11g can return candidates of a plurality of NFs to the inquiry source in response to an inquiry regarding an NF desired to be used.

The NSSF 11h has a function of selecting a network slice to be used by a subscriber from among network slices generated by network slicing. The network slice is a virtual network having specifications according to the application.

The AUSF 11i is a subscriber authentication server that performs subscriber authentication under the control of the AMF 11b. The UDM 11j is a database that holds subscriber related information and the like. The NWDAF 11k is an NF that has a function of collecting and analyzing data from each NF 11, an OAM terminal 8 (FIG. 1B), the AF 12, and the like and provides network analysis information.

Each NF forming the 5GC is constituted by one or a plurality of information processing apparatuses (general-purpose device or appliance (dedicated device)) or the like. The information processing apparatus is installed in a special building called a data center. The data center is also referred to as an office building. As illustrated in FIG. 1B, one or two or more data centers 6 are disposed in a 5GC communication area (3 is illustrated in FIG. 1B), and the data centers 6 are connected by a communication line 7. Each of the data centers 6 is provided with an operation, administration, and maintenance (OAM) terminal 8. The OAM terminal 8 has a function of performing operation, management, and maintenance of the network (5GC).

In the 5GC, a plurality of NFs of the same type may be prepared. For example, the NF 11 may be prepared for each data center 6. In addition, one NF 11 may be shared among the data centers 6. In addition, a plurality of NFs 11 of the same type may be configured by one data center 6. For the number of data centers 6 and the number of NFs 11, the correspondence relationship between the NFs 11 and the data center 6 can be appropriately set.

### Configuration of Information Processing Apparatus

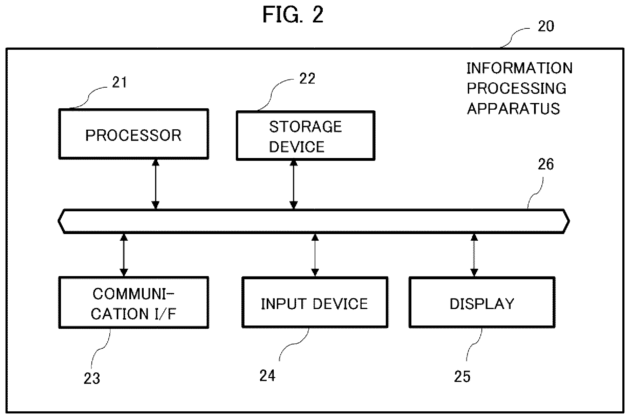

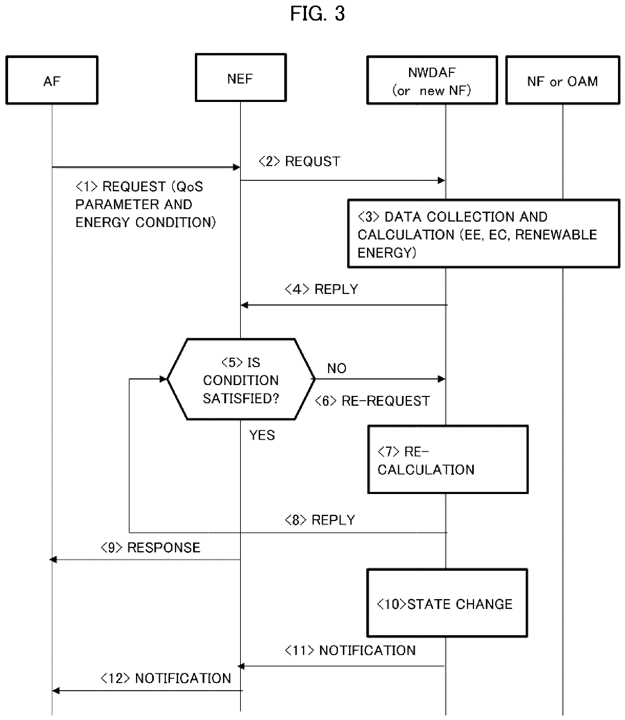

FIG. 2 is a diagram illustrating a configuration example of an information processing apparatus operable as each of the UE 2, the NFs 11a to 11k, the OAM terminal 8, and the AF 12. In FIG. 3, an information processing apparatus 20 can be configured using a dedicated or general-purpose information processing apparatus (computer) such as a personal computer (PC), a workstation (WS), or a server machine. However, the information processing apparatus 20 may be an aggregate (cloud) of one or two or more computers.

The information processing apparatus 20 includes a processor 21 as a processing unit or a control unit (controller), a storage device 22, a communication interface 23 (communication IF 23), an input device 24, and a display 25, which are mutually connected via a bus 26.

The storage device 22 includes a main storage device and an auxiliary storage device. The main storage device is used as at least one of a storage area for programs and data, a development area for programs, a work area for programs, a buffer area for communication data, and the like. The main storage device is configured by a random access memory (RAM) or a combination of a RAM and a read only memory (ROM). The auxiliary storage device is used as a storage area for data and programs. A non-volatile storage medium is applied to the auxiliary storage device. The non-volatile storage medium is, for example, a hard disk, a solid state drive (SSD), a flash memory, or an electrically erasable programmable read-only memory (EEPROM). Furthermore, the storage device 22 can include a drive device of a disk recording medium.

The communication IF 23 is circuitry that performs communication processing. For example, the communication IF 23 is a network interface card (NIC). Furthermore, the communication IF 23 may be wireless communication circuitry that performs wireless communication (5G, wireless LAN (Wi-Fi), BLE, and the like). Furthermore, the communication IF 23 may be a combination of circuitry that performs wired communication processing and wireless communication circuitry.

The input device 24 includes a key, a button, a pointing device, a touch panel, and the like, and is used to input information. The display 25 is, for example, a liquid crystal display or the like, and displays information and data.

The processor 21 performs various processes by executing various programs stored in the storage device 22. When the processor 21 executes the program stored in the storage device 22, the information processing apparatus 20 can operate as each of the UE 2, the NFs 11a to 11k, the OAM terminal 8, and the AF 12 (external server).

The processor 21 is, for example, a central processing unit (CPU). The CPU is also called a microprocessor unit (MPU). The processor 21 may have a single processor configuration or a multiprocessor configuration. In addition, a single physical CPU connected by a single socket may have a multi-core configuration. The processor 21 may include an arithmetic device having various circuitry configurations such as a digital signal processor (DSP) or a graphics processing unit (GPU). Furthermore, the processor 21 may have a configuration that cooperates with at least one of integrated circuitry (IC), another digital circuitry, analog circuitry, and the like. The integrated circuitry includes an LSI, an application specific integrated circuit (ASIC), a programmable logic device (PLD), and the like. The PLD includes, for example, a CPLD and a field-programmable gate array (FPGA). The processor 21 also includes what is called, for example, a microcontroller (MCU), a system-on-a-chip (SoC), a system LSI, a chipset, or the like. An execution subject of processing such as the processor 21, ASIC, PLD, MCU, SoC, or chipset is an example of "circuitry".

### First Operation Example

FIG. 3 is a sequence diagram illustrating an operation example of the communication system. The AF 12 connected to the 5GC transmits a request message to the NEF 11e at an appropriate timing (<1> in FIG. 3). The request message includes a QoS parameter to be used (set) for communication in units of predetermined communication (UE, PDU session, NF, site, or network slice), information indicating an energy condition, and a negotiation flag (information prompting generation and transmission of a reply).

The request message is an example of "information including a condition regarding energy consumed in communication using a network". The energy condition is an example of "a condition regarding energy consumed in communication using a network".

The QoS parameter may include a parameter that specifies a throughput, an error rate, a delay, and the like. The QoS parameters are not limited thereto. The energy condition includes a condition regarding at least one of EE, EC, a renewable energy amount, and a renewable energy rate.

The EC indicates, for example, the amount of energy utilized to achieve the purpose of a particular system. The EC is Joule [J], Watt-hour (Wh, may be Watt/second [Ws]). The EE also indicates the relationship between energy consumption (EC) and useful output (EE = Output/EC). When renewable energy is used as energy, the value of EC is EC = EC (renewable) + EC (non-renewable), and is expressed by the sum of EC related to renewable energy and EC related to non-renewable energy. Further, a renewable energy ratio (RER) is expressed by RER = EC (renewable)/(EC (renewable) + EC (non-renewable)).

As described above, the EE is the ratio of output (for example, the transmission data volume) to power consumption (EC). In order to improve the EE, it is conceivable to increase the transmission data with the same power, reduce the power consumption with the same data volume, or increase or decrease both the data and the power so as to increase the ratio of the data. When the RER increases, the EE may decrease. For example, although the NFs can be aggregated at the same site, the NFs may be selected from different sites in consideration of the use of renewable energy. Such selection is advantageous in terms of the core network. For this reason, there are users who allow a small sacrifice of EEs for RER priority.

As described above, the energy condition (condition regarding energy) can include at least one of the condition regarding the consumption of the energy (condition regarding EC) and the condition regarding the energy efficiency based on the consumption of the energy (condition regarding EE). In addition, the energy condition may include a condition regarding a renewable energy amount and a condition regarding a renewable energy rate (RER) as conditions regarding the use of renewable energy in communication.

The energy condition can be set for each of one or two or more selected from the EE, the EC, the renewable energy amount, and the renewable energy rate (RER: also referred to as renewable energy ratio). In addition, priorities can be provided for two or more selected from EE, EC, renewable energy amount, and renewable energy rate (for example, EE priority, EC priority, RER priority, and the like). For example, when a condition of a predetermined rank (for example, first priority) is satisfied, it can be determined that the energy condition is satisfied even in a case where a condition of a rank lower than the predetermined rank is not satisfied. Of course, it may be determined that the energy condition is satisfied in a case where all of the plurality of conditions included in the energy condition are satisfied. As the condition regarding the EE, for example, a necessary amount of power per unit bit can be set. In addition, as the condition regarding EC, for example, it is possible to set a predetermined amount of power or less. Further, as a condition regarding the renewable energy rate, a required renewable energy rate (for example, 50% or more) can be set. In addition, it is also possible to set a composite condition in which conditions for two or more selected from EE, EC, renewable energy amount, and renewable energy rate are combined. Note that the energy condition set at the time of contract related to the provision of the communication service may be used, or the energy condition dynamically set may be used.

The NEF 11e converts the request message from the AF 12 into a format in the 5GC and transmits the converted message to the NWDAF 11k (<2> in FIG. 3). Instead of the NWDAF 11k, one or two or more new NFs 11 that process a request from the AF 12 (NEF 11e) may be applied. Instead of the NWDAF 11k, an existing NF 11 (for example, the PCF 11d, the AMF 11b, the SMF 11c, or the like) other than one or a plurality of NWDAFs 11k may process the request from the AF 12 (NEF 11e). Alternatively, the NWDAF 11k and the existing NF 11 (and/or the new NF 11) may cooperate to process the request from the AF 12 (NEF 11e).

The NWDAF 11k collects information (energy-related information) for calculating at least one of EE, EC, and renewable energy according to the energy condition from the predetermined NF 11 and/or the OAM terminal 8. The NWDAF 11k calculates at least one of EE, EC, and renewable energy-related information (amount or rate) according to the energy condition (<3> in FIG. 3).

Specifically, in the embodiment, part of the operation of the 5G network (5GC 1 and RAN 3), that is, the power for operating the 5G network can be covered by renewable energy.

The NWDAF 11k operates as a data analysis unit and collects energy-related information in the entire or a part of the 5G network (each unit of UE, PDU session, NF, site, or slice). The energy-related information includes information indicating the EE, the EC, and the status of use of the renewable energy.

The NWDAF 11k can acquire the energy-related information from the NF 11 (for example, the UPF 11a, the SMF 11c, the AMF 11b, the PCF 11d, the UDM 11j, and the like), the OAM terminal 8, the RAN 3 (base station), the UE 2, and the like.

The acquisition of the energy-related information is performed, for example, by receiving information periodically transmitted from a provider device. Furthermore, the NWDAF 11k may transmit a provision request and acquire information transmitted from a provider as a response to the request. The number of devices of the provider and the range (unit) of the energy-related information included in the device of the provider can be appropriately set. As described above, the range of the energy-related information is a unit of communication such as the entire 5G network or a part thereof, for example, a UE, a PDU session, an NF, a site, or a network slice.

The NWDAF 11k can calculate (generate) at least one of information indicating the current EE, EC, renewable energy amount, and renewable energy rate and information (prediction information) indicating the EE, EC, renewable energy amount, and renewable energy rate at a future time point (in future) by using (analyzing) the QoS parameter included in the request and the energy-related information. The number of future time points (prediction time points) and the time length between the prediction time points (elapsed time from the current point of time) can be set as appropriate. In the setting of the energy condition, acquisition of either or both of the current information and the future information can be set. In the description using FIG. 3, in order to simplify the description, a case where only the current information is handled will be described.

The calculation of EE, EC, renewable energy amount, and renewable energy rate can be performed according to the content of the energy condition. For example, in a case where conditions for EE and EC are set, EE and EC are calculated, and calculation regarding renewable energy is omitted.

The NWDAF 11k obtains an EC when communication is performed according to the QoS parameter in units of communication, and calculates EE by dividing a predetermined output in units of communication by the EC. Further, the NWDAF 11k can also obtain the renewable energy rate from the renewable energy amount obtained as the energy-related information. The NWDAF 11k generates a reply message including at least one of EE, EC, renewable energy amount, and renewable energy rate according to the energy condition, and transmits the reply message to the NEF 11e (<4> in FIG. 3).

The NEF 11e determines whether at least one of EE, EC, renewable energy amount, and renewable energy rate included in the reply message satisfies the energy condition (<5> in FIG. 3). In a case where it is determined that the energy condition is not satisfied, the NEF 11e sends a rerequest message to the NWDAF 11k that includes a QoS parameter whose value of the QoS parameter included in the request from the AF 12 has been relaxed (the condition has been relaxed) (<6> in FIG. 3).

The NWDAF 11k performs recalculation of at least one of EE, EC, renewable energy amount, and renewable energy rate based on the relaxed QoS (<7> in FIG. 3), generates a reply message including a result of the recalculation, and transmits the reply message to the NEF 11e (<8> in FIG. 3).

In a case where it is determined that at least one of EE, EC, renewable energy amount, and renewable energy rate in the request received from the NWDAF 11k satisfies the energy condition from the AF 12, the NEF 11e generates a response message including information indicating that the energy condition is satisfied and transmits the response message to the AF 12 (<9> in FIG. 3). As a result, the user (operator) of the AF 12 can know that the QoS parameter desired to be used in communication satisfies the energy condition. Then, the NF 11 such as the SMF 11c or the PCF 11d can set such QoS parameters as NFs (AMF 11b, SMF 11c, UPF 11a, etc.) for communication.

On the other hand, in a case where it is determined that at least one of EE, EC, renewable energy amount, and renewable energy rate in the request received from the NWDAF 11k does not satisfy the energy condition from the AF 12, the NEF 11e determines whether the recalculation result received from the NWDAF 11k satisfies the energy condition. Here, in a case where it is determined that the energy condition is satisfied, the NEF 11e can generate a response message including information indicating the relaxed QoS parameter and send the response message to the AF 12 (<9> in FIG. 3).

In a case where the recalculation result does not satisfy the energy condition, the NEF 11e may further relax the QoS parameter to request recalculation (<6> in FIG. 3). Such a loop process is performed, and in a case where the original QoS parameter does not satisfy the energy condition, the AF 12 can receive information indicating the relaxed QoS parameter that satisfies the energy condition from the NEF 11e. In a case where the energy condition cannot be finally satisfied, the AF 12 may be notified that the energy condition cannot be satisfied.

In addition, the NEF 11e may perform calculation at one or two or more future time points with respect to at least one of EE, EC, renewable energy amount, and renewable energy rate according to the energy condition, determine a time block in which the energy condition is satisfied, and include the time block in the response message to the AF 12.

Furthermore, the NWDAF 11k may detect a state change of the network (<10> in FIG. 3), and the AF 12 may be notified of information indicating the state change via the NEF 11e (<11> in FIG. 3, <12> in FIG. 3). When the AF 12 receives the notification of the state change and sends the request message, it is possible to know whether communication by the desired QoS parameter is possible in a state of satisfying the energy condition.

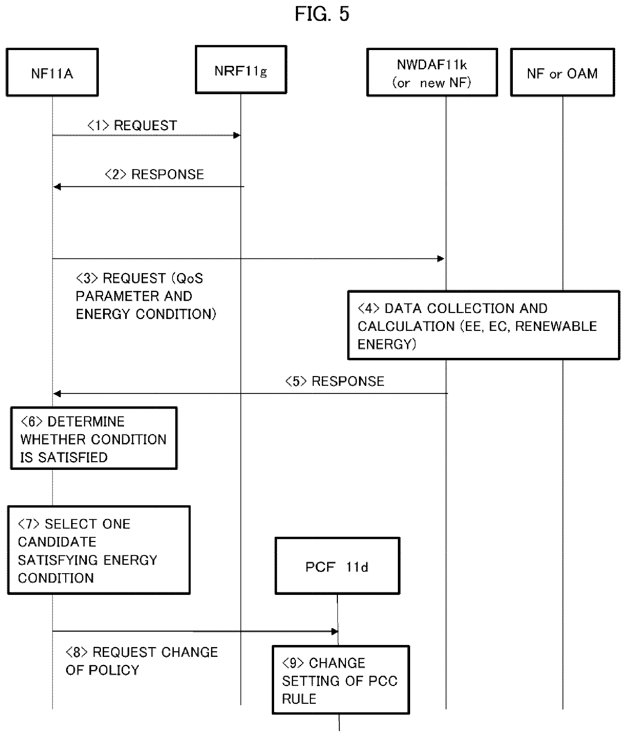

The first operation example described above can be modified as follows. The second device (NWDAF 11k) makes the determination in <5> in FIG. 5 based on the calculation result in <3> in FIG. 5 (the NEF 11e does not receive the reply in <4> in FIG. 5 and does not make the determination in <5> in FIG. 5). In a case where the energy condition is not satisfied, the NWDAF 11k performs a recalculation (<7> in FIG. 5) for the relaxed QoS parameters (which the NWDAF 11k retains in advance or obtains from other NFs 11). Then, the NWDAF 11k sends information (an alternative of the QoS parameter) indicating the relaxed QoS parameter that satisfies the energy condition to the NEF 11e, and the NEF 11e transmits information based on the determination result including the information indicating the relaxed QoS parameter to the AF 12.

### Second Operation Example

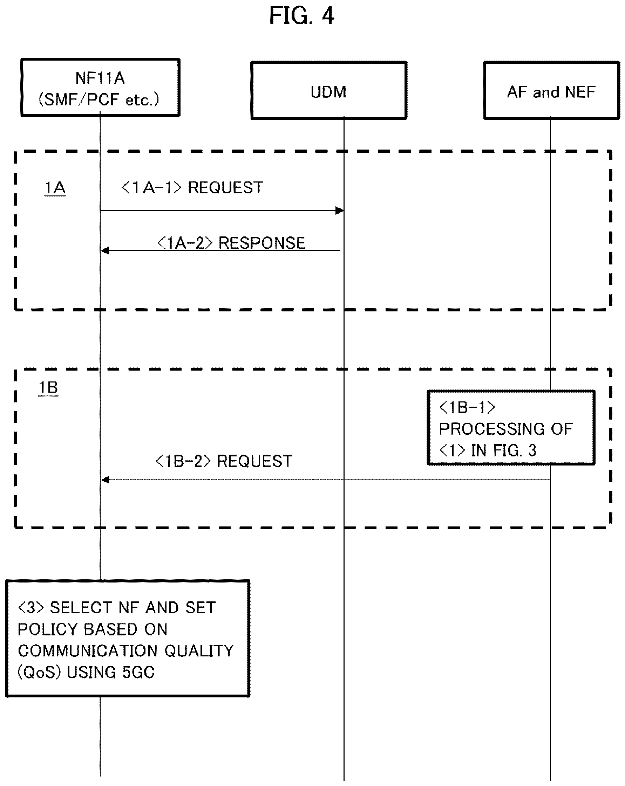

FIG. 4 is a sequence diagram illustrating a second operation example of the communication system. FIG. 4 illustrates procedure 1A and procedure 1B, and either one of procedure 1A and procedure 1B is performed. The request received by the NF 11A in <1B-1> in procedure 1B is the request (QoS parameter and energy condition) in <1> in FIG. 3.

On the other hand, in procedure 1A, the NF 11A sends a request to the UDM 11j, and can receive the QoS parameter and the energy condition sent to the NEF 11e in the procedure of <1> in FIG. 3 as a reply from the UDM 11k.

FIG. 5 is a sequence diagram illustrating details of <3> in FIG. 4. The NF 11A can perform, for example, the following NF selection. The NRF 11g stores and manages information of the NF 11 (for example, AMF 11b, SMF 11c, UPF 11a, and the like) in the 5GC. The NF 11A can make an inquiry to the NRF 11g (<1> in FIG. 5) and acquire candidates of a plurality of NFs 11 from the NRF 11g (<2> in FIG. 5).

The NF 11A transmits a request including QoS parameters, information on candidates of a plurality of NFs, and energy conditions to the NWDAF 11k (<3> in FIG. 5). The NWDAF 11k collects information regarding candidates of a plurality of NFs, and calculates EC, EE, renewable energy amount, or rate according to an energy condition for each NF candidate.

The NF 11A receives a calculation result for each candidate from the NWDAF 11k as a response (<5> in FIG. 5). Note that the following operation may be performed instead of the above-described operations of <1> to <5> in FIG. 5. In <1> in FIG. 5, the NF 11A includes, in the request, contents (QoS parameters and energy conditions) of the request to be transmitted in <3> in FIG. 5. The NRF 11g that has received the request transmits a request including the information of the candidates of the plurality of the NFs 11, the QoS parameter, and the energy condition to the NWDAF 11k. The NWDAF 11k performs the processing of <4> in FIG. 5 and returns the calculation result for each candidate to the NRF 11g. Then, the NRF 11g transmits information of the candidates of the plurality of the NFs 11 and a calculation result for each candidate to the NFs 11 as a response of <2> in FIG. 5. In such an operation, the NF 11A may obtain a calculation result for each candidate.

The NF 11A determines whether each of the calculation results for each candidate satisfies the energy condition (<6> in FIG. 5). The NF 11A selects one NF 11 from among the candidates of the plurality of the NFs 11 according to a predetermined rule (for example, EC is minimum, RER is maximum, or the like) from among the candidates satisfying the energy condition (<7> in FIG. 5).

Note that, in a case where there is no candidate satisfying the energy, or the like, and it is necessary to relax the QoS applied to communication, the NF 11A transmits a policy change request including information indicating the relaxed QoS parameter to the PCF 11d (<8> in FIG. 5). The PCF 11d configures or updates a required policy and billing (PCC) rule according to the relaxed QoS parameter (<9> in FIG. 5). A policy change applies the relaxed QoS to the communication. In the second operation example, an example of the selection of the NF has been described, but the policy change can be performed independently of the selection of the NF. For example, the NF 11A may transmit the desired QoS parameter and energy condition to the NWDAF 11k and receive a reply from the NWDAF 11k indicating that the desired QoS parameter satisfies (or does not satisfy) the energy condition. In this case, in a case where the QoS parameter needs to be reflected (applied to the communication) in the policy, the NF 11A sends a policy change request to the PCF 11d, and the PCF 11d changes the policy. That is, by performing the operation excluding the procedures <1>, <2>, and <7> related to the selection of the NF from the sequence of FIG. 5, it is possible to change the policy based on the QoS parameter and the energy condition.

### Operation and Effect of Embodiment

According to the communication control method in the communication system according to the embodiment, the first device (NEF 11e) receives information (request message including energy condition) including a condition regarding energy consumed in communication using the network (5GC). In addition, the first device (NEF 11e) transmits information (response message) based on a determination result as to whether the communication satisfies the energy condition to the transmission source (AF 12) of the information. As a result, the AF 12 can grasp whether the energy condition is satisfied in communication in which a desired QoS parameter is set for units of predetermined communication. That is, it is possible to grasp whether the target communication satisfies the condition regarding the consumed energy.

The condition regarding the energy can include at least one of a condition regarding a consumption of the energy (condition regarding EC) and a condition regarding energy efficiency based on the consumption (condition regarding EE). Furthermore, the condition regarding the energy can include a condition regarding use of renewable energy in communication (renewable energy amount, renewable energy rate).

The information based on the determination result (the response message to the AF 12) can include information indicating whether the communication satisfies the condition regarding the energy. Furthermore, the response message to the AF 12 can include at least one of information indicating whether the communication satisfies the condition regarding the EC and information indicating whether the communication satisfies the condition regarding the EE. The response message to the AF 12 can also include information indicating whether the communication satisfies the condition regarding the use of the renewable energy.

In the communication control method according to the embodiment, in a case where the communication does not satisfy the energy condition or does not satisfy the energy condition in the future, the information based on the determination result (the response message to the AF 12) can include information indicating alternative communication that satisfies the energy condition. For example, the information indicating the alternative communication may include information indicating an alternative quality parameter (QoS parameter) in which a quality parameter (QoS parameter) related to the communication is relaxed such that an energy condition is satisfied.

In the communication control method according to the embodiment, in a case where the communication does not satisfy the energy condition or does not satisfy the condition in the future, the information based on the determination result can include at least one of the information indicating the consumption of the energy (EC), the information indicating the energy efficiency (EE) based on the consumption, and the information regarding the use of the renewable energy in the communication in a case where the quality parameter (QoS parameter) related to the communication is relaxed.

In the communication control method according to the embodiment, in a case where the communication does not satisfy the energy condition or does not satisfy the energy condition in the future, the information based on the determination result can include information indicating a time block in which the energy condition is satisfied.

In the communication control method according to the embodiment, the second device (NWDAF 11k) receives information indicating a quality parameter (QoS parameter) of the communication from the first device (NEF 11e). The second device (NWDAF 11k) acquires at least one of information indicating an amount of energy (EC) used by communication using a quality parameter (QoS parameter), information indicating energy efficiency (EC) based on the amount of energy, and information regarding use of renewable energy in the amount of energy (renewable energy amount, renewable energy rate). Then, the first device (NEF 11e) or the second device (NWDAF 11k) can determine whether the communication using the QoS parameter satisfies the energy condition on the basis of at least one of the information indicating the EC, the information indicating the EE, and the information regarding the use of the renewable energy.

In the communication control method according to the embodiment, in a case where it is determined that the communication does not satisfy the energy condition, the first device (NEF 11e) transmits information indicating the relaxed quality parameter (relaxed QoS parameter) to the second device (NWDAF 11k). The second device (NWDAF 11k) acquires (calculates) at least one of the information indicating the EC to be used by the communication using the relaxed quality parameter, the information indicating the EE, and the information regarding the use of the renewable energy. Then, the first device (NEF 11e) determines whether the communication using the relaxed quality parameter satisfies the energy condition based on at least one of the information indicating the EC, the information indicating the EE, and the information regarding the use of the renewable energy. In a case where it is determined that the communication using the relaxed quality parameter satisfies the energy condition, the first device (NEF 11e) transmits the information based on the determination result, including the information indicating the relaxed quality parameter. In this way, an alternative to the QoS parameter can be indicated in a case where the energy condition is not satisfied.

In the communication control method according to the embodiment, in a case where the state of the network (5GC) changes, the first device (NEF 11e) can transmit information indicating the change in the state of the network to the transmission source (AF 12) of the information.

The above embodiments and modifications are merely examples, and the present disclosure can be appropriately modified and implemented without departing from the gist thereof. Furthermore, the processing and means described in the present disclosure can be freely combined and implemented as long as no technical contradiction occurs.

Furthermore, the processing described as being performed by one device may be shared and executed by a plurality of devices. Alternatively, the processing described as being performed by different devices may be executed by one device. In the computer system, what hardware configuration (server configuration) realizes each function can be flexibly changed.

The present disclosure can also be implemented by supplying a computer program having the functions described in the above embodiments to a computer, and reading and executing the program by one or more processors included in the computer. Such a computer program may be provided to the computer by a non-transitory computer-readable storage medium connectable to a system bus of the computer, or may be provided to the computer via a network. The non-transitory computer-readable storage medium includes any type of medium suitable for storing electronic instructions, such as, for example, any type of disk, such as a magnetic disk (Floppy (registered trademark) disk, hard disk drive (HDD), and the like), an optical disk (CD-ROM, DVD disk, Blu-ray disk, etc.), a read only memory (ROM), a random access memory (RAM), an EPROM, an EEPROM, a magnetic card, a flash memory, or an optical card.

## Claims

1. A communication control method comprising:
receiving, by a first device (lle), information including a condition regarding energy consumed in communication that uses a network (5GC); and
transmitting, by the first device (lle), information based on a determination result as to whether the communication satisfies the condition, to a transmission source (12) of the information.

2. The communication control method according to claim 1, wherein the condition regarding the energy includes at least one of a condition regarding a consumption of the energy and a condition regarding energy efficiency based on the consumption.

3. The communication control method according to claim 1 or 2, wherein the condition regarding the energy includes a condition regarding use of renewable energy in the communication.

4. The communication control method according to any preceding claim, wherein the information based on the determination result includes information indicating whether the communication satisfies the condition regarding the energy.

5. The communication control method according to claim 2, wherein the information based on the determination result includes at least one of information indicating whether the communication satisfies the condition regarding the consumption of the energy and information indicating whether the communication satisfies the condition regarding the energy efficiency.

6. The communication control method according to claim 3, wherein the information based on the determination result includes information indicating whether the communication satisfies the condition regarding the use of the renewable energy.

7. The communication control method according to any preceding claim, wherein in a case where the communication does not satisfy the condition or does not satisfy the condition in a future, the information based on the determination result includes information indicating alternative communication that satisfies the condition.

8. The communication control method according to claim 7, wherein the information indicating the alternative communication includes information indicating an alternative quality parameter in which a quality parameter related to the communication is relaxed so that the condition is satisfied.

9. The communication control method according to any preceding claim, wherein in a case where the communication does not satisfy the condition or does not satisfy the condition in a future, the information based on the determination result includes at least one of information indicating a consumption of the energy, information indicating energy efficiency based on the consumption, and information regarding use of renewable energy in the communication in a case where a quality parameter related to the communication is relaxed.

10. The communication control method according to any preceding claim, wherein in a case where the communication does not satisfy the condition or does not satisfy the condition in a future, the information based on the determination result includes information indicating a time block in which the condition is satisfied.

11. The communication control method according to any preceding claim, further comprising:
receiving, by a second device (11k), information indicating a quality parameter of the communication from the first device (11e);
acquiring, by the second device (11k), at least one of information indicating an amount of energy used by communication that uses the quality parameter, information indicating energy efficiency based on the amount of the energy, and information regarding use of renewable energy in the amount of the energy; and
determining, by the first device (11e), whether the communication that uses the quality parameter satisfies the condition on the basis of at least one of information indicating the amount of the energy, information indicating the energy efficiency, and information regarding the use of the renewable energy.

12. The communication control method according to any preceding claim, further comprising:
transmitting by the first device (lle), in a case where determination is made that the communication does not satisfy the condition, information indicating a relaxed quality parameter in which a quality parameter of the communication is relaxed to the second device (11k);
acquiring, by the second device (11k), at least one of information indicating an amount of energy used by communication that uses the relaxed quality parameter, information indicating energy efficiency based on the amount of the energy, and information regarding use of renewable energy in the amount of the energy; and
determining, by the first device (11e), whether the communication that uses the relaxed quality parameter satisfies the condition on the basis of at least one of information indicating the amount of the energy, information indicating the energy efficiency, and information regarding the use of the renewable energy.

13. The communication control method according to claim 12, further comprising:
in a case where determination is made that the communication that uses the relaxed quality parameter satisfies the condition, transmitting, by the first device (11e), the information based on the determination result, the information including the information indicating the relaxed quality parameter.

14. The communication control method according to any preceding claim, further comprising:
transmitting, by the first device (lle), information indicating a change in a state of the network to a transmission source (12) of the information in a case where the state of the network changes.

15. A communication system comprising a first device (lle), wherein the first device (11e) includes circuitry that executes processing of receiving information including a condition regarding energy consumed in communication that uses a network and processing of transmitting information based on a determination result as to whether the communication satisfies the condition, to a transmission source (12) of the information.
